(19) Europäisches Patentamt
European Patent Office
Office européen des brevets

(11) **EP 3 239 656 B1**

(12) **FASCICULE DE BREVET EUROPEEN**

(45) Date de publication et mention
de la délivrance du brevet:
**12.12.2018 Bulletin 2018/50**

(51) Int Cl.:
*G01C 21/00* *(2006.01)*  *G01S 13/10* *(2006.01)*
*G01S 13/52* *(2006.01)*  *G05D 1/10* *(2006.01)*
*G08G 5/00* *(2006.01)*  *G01S 7/292* *(2006.01)*
*G01S 7/41* *(2006.01)*

(21) Numéro de dépôt: **17168299.0**

(22) Date de dépôt: **26.04.2017**

(54) **PROCÉDÉ D'OPTIMISATION DE LA DÉTECTION DE CIBLES MARINES ET RADAR AÉROPORTÉ METTANT EN OEUVRE UN TEL PROCÉDÉ**

OPTIMIERUNGSVERFAHREN DER ERKENNUNG VON ZIELEN IM MEER, UND RADAR AN BORD EINES FLUGGERÄTS ZUR UMSETZUNG DIESES VERFAHRENS

METHOD FOR OPTIMISING THE DETECTION OF SEA TARGETS AND AIRBORNE RADAR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2016 FR 1600714**

(43) Date de publication de la demande:
**01.11.2017 Bulletin 2017/44**

(73) Titulaire: **THALES**
**92400 Courbevoie (FR)**

(72) Inventeurs:
 • **CORRETJA, Vincent**
  **33608 PESSAC Cedex (FR)**
 • **GUERRINI, Gilles**
  **33608 PESSAC Cedex (FR)**
 • **SFEZ, Thierry**
  **78851 ELANCOURT Cedex (FR)**
 • **MONTIGNY, Richard**
  **33608 PESSAC Cedex (FR)**
 • **KEMKEMIAN, Stéphane**
  **78851 ELANCOURT Cedex (FR)**
 • **CHABROUX, Jean-Marc**
  **78851 ELANCOURT cedex (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A1- 2012 127 025**

 • **Stéphane Kemkemian ET AL: "Slow and Small Target Detection in High Sea States Thales Airborne Systems", , 26 juin 2015 (2015-06-26), XP055329541, Extrait de l'Internet: URL:http://ieeexplore.ieee.org/ielx7/72091 73/7226207/07226300.pdf?tp=&arnumber=72263 00&isnumber=7226207 [extrait le 2016-12-15]**
 • **YANG YONG ET AL: "Modelling and simulation of spatial-temporal correlateddistributed clutter for coherent radar seeker", IET RADAR SONAR NAVIGATION, THE INSTITUTION OF ENGINEERING AND TECHNOLOGY, UK, vol. 8, no. 1, 1 janvier 2014 (2014-01-01) , pages 1-8, XP006048084, ISSN: 1751-8784, DOI: 10.1049/IET-RSN.2012.0373**
 • **SHUI PENG-LANG ET AL: "Subband adaptive GLRT-LTD for weak moving targets in sea clutter", IEEE TRANSACTIONS ON AEROSPACE AND ELECTRONIC SYSTEMS, IEEE SERVICE CENTER, PISCATAWAY, NJ, US, vol. 52, no. 1, 1 février 2016 (2016-02-01), pages 423-437, XP011604932, ISSN: 0018-9251, DOI: 10.1109/TAES.2015.140783 [extrait le 2016-03-29]**
 • **LI DONG-CHEN ET AL: "Floating small target detection in sea clutter via normalised Doppler power spectrum", IET RADAR SONAR NAVIGATION, THE INSTITUTION OF ENGINEERING AND TECHNOLOGY, UK, vol. 10, no. 4, 1 avril 2016 (2016-04-01), pages 699-706, XP006055802, ISSN: 1751-8784, DOI: 10.1049/IET-RSN.2015.0259**

**Description**

La présente invention concerne un procédé d'optimisation de la détection de cibles par un radar aéroporté. Elle concerne également un radar mettant en oeuvre un tel procédé.

Dans le cadre de la surveillance maritime, notamment lors d'opération de sauvetage en mer, un radar aéroporté a pour mission de détecter les cibles marines. Pour effectuer cette mission, le radar capte le signal rétrodiffusé par les cibles. Cependant, le signal capte aussi un signal perturbateur rétrodiffusé par la mer, appelé fouillis ou fouillis de mer. La position et l'intensité de la zone de fouillis sont variables selon l'état de la mer, la présentation par rapport au vent notamment, et les conditions précises de détection sont inconnues a priori.

Actuellement, pour un radar de surveillance aéroporté tel celui divulgué dans la demande US2012/0127025 A1, l'opérateur détermine de manière autonome la trajectoire du porteur du radar sans prise en compte de l'optimisation des traitements de détection. Les inconvénients de cette solution sont notamment les suivants :

- La performance de détection du radar n'est pas la performance maximale atteignable ;
- S'il décide de prendre en compte les paramètres permettant l'optimisation des traitements de détection comme critère pour déterminer sa trajectoire, l'opérateur ne dispose d'aucune aide par le radar. Il s'ensuit alors ces autres inconvénients :

    - L'opérateur passe un temps important pour analyser l'environnement de mer ou la météo et pour choisir la loi de navigation optimale ;
    - L'opérateur doit, pour faire ce choix à bon escient, avoir été formé d'une part et disposer d'une expérience solide d'autre part ;
    - L'opérateur fait le choix de la trajectoire en fonction de sa propre perception et évaluation de l'environnement, souvent enrichie par la connaissance d'informations météo, toutefois cette évaluation peut être limitée en précision et peut ne pas correspondre à celle perçue par le radar lors de son traitement de détection.

Le but de l'invention est de pallier les inconvénients précités, en particulier en proposant, de manière automatique, une loi de navigation du porteur de manière à maximiser la probabilité de réussite d'une mission opérationnelle. A cet effet, l'invention a pour objet un procédé d'optimisation de la détection de cibles marines effectuée par un radar aéroporté équipant un porteur, la détection étant réalisée pour une mission donnée, ledit procédé comportant :

- Une phase d'analyse, d'apprentissage et d'actualisation de l'environnement dans laquelle les éléments d'influence du fouillis de mer perçus par le radar sont recherchés et mémorisés ;
- Une phase de mise à jour de la trajectoire à suivre par le porteur en fonction des besoins de ladite mission et desdits éléments d'influence issus du résultat de ladite phase d'analyse, ladite trajectoire à suivre réduisant la puissance du fouillis reçue par le radar lorsque ladite antenne pointe vers une zone de recherche susceptible de contenir une cible ;

lesdites phases étant répétées tout au long de ladite mission.

Un élément d'influence étant la direction de pointage de l'antenne dudit radar par rapport à la direction du vent, ladite direction du vent est déterminée en détectant la direction où la puissance du signal rétrodiffusé par la mer est maximale lors de ladite phase d'analyse de l'environnement.

Dans un mode de mise en oeuvre particulier, ladite phase d'analyse est effectuée à chaque cycle de balayage, ladite phase de mise à jour étant effectuée également à chaque cycle de balayage.

Un élément d'influence étant la direction de pointage de l'antenne dudit radar par rapport à la direction du vent et le mode de détection étant non cohérent, ladite trajectoire à suivre est par exemple fonction dudit élément d'influence et de ladite zone de recherche par rapport au cap du porteur, selon que ladite zone est située à l'avant, à l'arrière ou perpendiculairement.

Un élément d'influence étant le rapport fouillis à bruit et le mode de détection étant non cohérent, ladite trajectoire à suivre est par exemple fonction dudit rapport, ladite trajectoire étant déviée vers un autre cap lorsque ledit rapport dépasse un seuil donné.

Des éléments d'influence étant la direction de pointage de l'antenne dudit radar par rapport à la direction du vent et le gisement de l'antenne, et le mode de détection étant cohérent, ladite trajectoire à suivre est par exemple perpendiculaire à la direction du vent en cas de mission de détection d'une cible supposée mobile et parallèle à la direction du vent en cas de mission de détection d'une cible supposée immobile.

Après ladite phase d'analyse de l'environnement, les moyens de traitement mettent par exemple à jour et mémorisent une carte du vent, la trajectoire à suivre mise à jour étant également mémorisée.

Ladite trajectoire à suivre, mise à jour, est par exemple transmise à un opérateur par ledit radar par des moyens appropriés.

Ladite mission est par exemple une patrouille maritime ou de surveillance maritime, en particulier une mission de sauvetage en mer.

L'invention a également pour objet un radar mettant en oeuvre un procédé tel que précédemment décrit.

D'autres caractéristiques et avantages de l'invention apparaîtront à l'aide de la description qui suit, faite en regard de dessins annexés qui représentent :

- La figure 1, une illustration du principe du procédé selon l'invention ;
- La figure 3, un exemple de configuration d'un porteur 21 en fonction de la direction 22 du vent ;

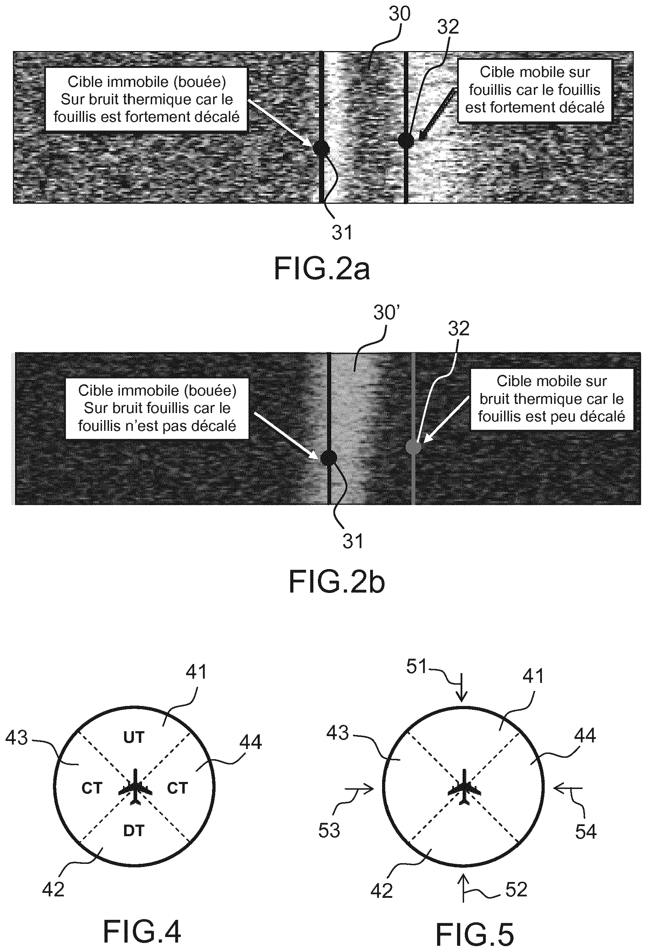

- Les figures 2a et 2b, respectivement une illustration du décalage de spectre Doppler et le spectre Doppler centré autour de zéro ;
- La figure 4, une configuration du porteur en fonction de l'azimut de la zone de recherche de cibles ;
- La figure 5, une illustration de la direction du vent par rapport au porteur du radar ;

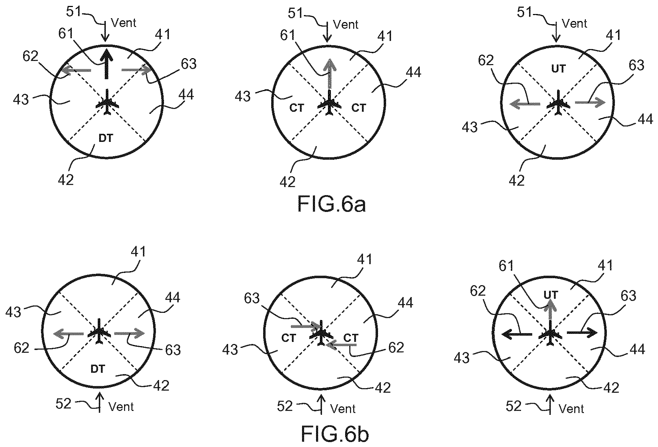

- Les figures 6a à 6d, successivement, en fonction de l'orientation du vent par rapport au porteur, les douze configurations porteur/cibles/vent différentes et le choix de trajectoire associé ;

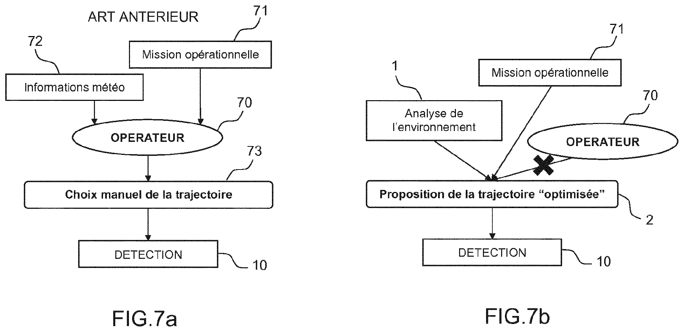

- Les figures 7a et 7b, respectivement un procédé de détection de cibles maritimes selon l'art antérieur et le procédé de détection selon l'invention.

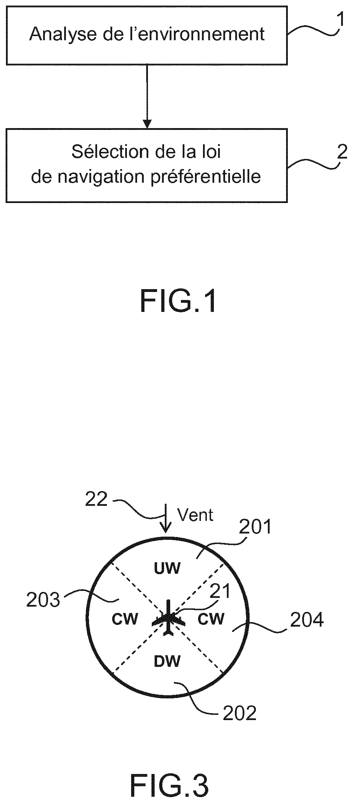

La figure 1 illustre le principe du procédé selon l'invention. Dans une phase d'analyse d'environnement 1, le radar aéroporté analyse en temps réel son environnement sur tout son domaine de détection, puis dans une deuxième phase 2, en fonction du résultat de son analyse et de la mission opérationnelle, il élabore de manière automatique une loi de navigation optimum, c'est-à-dire maximisant la probabilité de détection, et cela pour chaque zone de son domaine de détection.

Dans ce cadre, il évalue les propriétés du fouillis de mer dans les zones d'intérêt pour le besoin opérationnel afin d'en déduire la trajectoire optimale. En fonction des caractéristiques de traitement, mode cohérent ou non cohérent, des éléments d'influence interviennent dans la détection de cibles en présence de fouillis de mer, la puissance de fouillis étant un facteur déterminant dans la détection radar de cibles maritimes. La trajectoire à suivre est notamment calculée en fonction de ces éléments d'influence.

On aborde maintenant les influences dans le cas d'un traitement cohérent. Dans ce cas, les éléments d'influence sont notamment le gisement de l'antenne et la direction de pointage de l'antenne par rapport au vent. Pour mettre en évidence ces influences, on modélise le spectre Doppler des échantillons du fouillis de mer.

Il est connu que la direction de pointage $\phi$ de l'antenne par rapport au vent a une influence sur la fréquence Doppler $\bar{f}$ et donc du décalage du spectre Doppler.

Ainsi, si $\phi$ est proche de 0 modulo 180°, le spectre Doppler du fouillis de mer est décalé comme l'illustre la figure 2a. A titre d'exemple, une cible immobile 31, par exemple une bouée ancrée au sol, donc à vitesse nulle, est détectée sur bruit thermique car le fouillis 30 est fortement décalé. Une cible mobile 32 est sur fouillis car le fouillis est fortement décalé. Dans une telle situation, il est alors aisé de détecter dans le bruit thermique du radar une cible immobile dont le spectre est centré sur 0.

Au contraire, si $\phi$ est proche de 90° modulo 180°, le spectre Doppler du fouillis de mer est centré autour de zéro comme l'illustre la figure 2b. Une cible immobile 31, par exemple une bouée, est sur fouillis 30' car le fouillis n'est pas décalé. Une cible mobile 32 est sur bruit thermique car le fouillis est peu décalé. Dans une telle situation, il est alors aisé de détecter dans le bruit thermique du radar une cible mobile dont le spectre n'est pas centré sur 0, mais il devient difficile de détecter une cible immobile.

Il est également connu que le gisement de l'antenne a une influence directe sur la largeur du spectre Doppler du fouillis de mer.

En effet, plus le gisement de l'antenne est important, plus l'écart type de l'antenne est important et par conséquent, plus la largeur du spectre est grande. Or plus le spectre est large, plus la détection d'une cible située dans ce spectre est difficile.

Il apparaît donc que dans le cas d'un traitement cohérent on peut distinguer au moins deux éléments d'influence : la direction de pointage de l'antenne par rapport au vent, définie par l'angle $\phi$, et le gisement de l'antenne. Le premier élément influe sur le décalage du spectre alors que le deuxième agit sur la largeur du spectre.

En ce qui concerne le décalage du spectre Doppler, il existe alors une dépendance au type de cible recherché :

- si la cible recherchée est immobile, il est intéressant d'avoir la direction $\phi$ de pointage de l'antenne proche de 0 modulo 180°, afin d'avoir le spectre Doppler décalé ;
- au contraire, si la cible recherchée est immobile, il est plus intéressant d'avoir le spectre Doppler centré autour de 0 et donc d'avoir une direction de pointage $\phi$ proche de 90° modulo 180°. Si on dispose d'une connaissance a priori du signe de la vitesse radiale de la cible, on peut privilégier un décalage du spectre Doppler à l'opposé, par exemple pour une vitesse radiale de cible positive, on choisit un angle $\phi$ proche de 180°.

L'invention permet avantageusement de sélectionner une loi de navigation préférentielle en fonction du contexte de mission. En particulier un dispositif selon l'invention est apte à délivrer une loi de navigation optimale afin de maximiser la probabilité de détection d'une cible en environnement maritime. Au début de la mission, un opérateur choisit la SER minimale des cibles qu'il souhaite détecter, la zone de recherche d'une ou plusieurs cibles et le mode de traitement, cohérent ou non cohérent.

Si la SER minimale accessible est inférieure à celle indiquée par l'opérateur dans la zone de recherche choisie, alors un message transmis par le dispositif indique par exemple que la configuration en cours est opérationnelle. Dans le cas contraire, une suggestion de direction du porteur est faite pour permettre à celui-ci d'être dans une meilleure situation afin de pouvoir détecter les cibles avec la SER souhaitée, dans la zone indiquée.

La direction préférentielle que doit prendre le porteur est déterminée en fonction du besoin opérationnel qui définit le choix du traitement de détection.

Dans le cas d'un traitement en mode non cohérent, les facteurs dimensionnant sont la puissance du fouillis et la configuration du porteur par rapport au vent. Pour limiter la puissance du fouillis et optimiser la recherche de cibles, plusieurs configurations du porteur sont prises en compte en fonction notamment de l'azimut de la zone de recherche par rapport au cap du porteur et/ou de la direction du vent par rapport au porteur.

La figure 3 illustre un exemple de configuration d'un porteur 21 en fonction de la direction 22 du vent. Dans cet exemple, l'aéronef 21 portant le radar, se dirige face au vent. Afin de caractériser la configuration du porteur par rapport au vent, la zone autour du porteur est divisée en quatre parties égales. Une première partie de zone 201, dite « upwind » (UW), caractérise le déplacement du porteur lorsque le faisceau d'antenne est dirigé face au vent ou principalement face au vent. Une deuxième partie 202, dite « downwind » (DW), opposée à la précédente, décrit une partie où le faisceau d'antenne est dirigé en vent arrière, ou principalement en vent arrière. Enfin, les deux dernières parties 203, 204, dites « crosswind » (CW), correspondent aux cas où le faisceau d'antenne est dirigé perpendiculairement, ou principalement perpendiculairement, à la direction du vent.

En fonction de la direction de pointage de l'antenne par rapport au vent, la contribution des vagues dans le fouillis de mer est différente.

Ainsi la configuration « upwind » (UW) est la plus défavorable pour la détection de cibles. En effet dans cette configuration, la surface équivalente radar (SER) des crêtes de vague est la plus importante et donc la puissance du fouillis de mer également. A l'inverse, en configuration « downwind » (DW), la contribution du vent est la moins importante. Dans la configuration « crosswind » (CW), la puissance du fouillis de mer est moins importante qu'en configuration « upwind » mais plus importante qu'en configuration « downwind ».

Ainsi dans le cas d'un traitement non cohérent, on peut distinguer deux éléments d'influence : la puissance du fouillis et la configuration de l'antenne par rapport au vent.

Si la puissance du fouillis est trop importante dans les cases distance correspondant à la zone de recherche, cas d'un CNR élevé, la détection est difficile voire impossible. En outre, si le porteur est dans une mauvaise configuration par rapport au vent, par exemple « upwind », la détection d'une cible est encore plus difficile.

Il peut donc être intéressant de suggérer une trajectoire de porteur afin d'opérer dans une meilleure configuration, avec une puissance de fouillis moins élevée.

La figure 4 illustre une configuration du porteur en fonction de l'azimut de la zone de recherche de cibles. Dans cette configuration, on considère trois cas possibles :

- la zone de recherche 41 est devant le porteur, la configuration est dite « uptarget » (UT) ;
- la zone de recherche 42 est derrière le porteur, configuration dite « downtarget » (DT) ;
- la zone de recherche 43, 44 est perpendiculaire au porteur, configuration dite « crosstarget » (CT).

L'espace d'azimut est divisé en fait en quatre zones de recherche égales 41, 42, 43, 44 centrée chacune sur un axe. Les axes des zones avant 41 et arrière 42 sont confondus avec l'axe du porteur, et les axes des zones perpendiculaires 43, 44 sont perpendiculaires à l'axe du porteur.

La figure 5 illustre la direction du vent par rapport au porteur. On considère quatre cas :

- Vent de face (debout), vent du nord 51 dans l'exemple de la figure 5;
- Vent arrière, vent du sud 52 dans l'exemple de la figure 5 ;
- Vent de gauche (bâbord), vent d'ouest 53 dans l'exemple de la figure 5 ;
- Vent de doite (Tribord), vent d'est 54 dans l'exemple de la figure 5.

La direction du vent influe sur la configuration du porteur qui peut alors, en référence à la figure 3, se retrouver en configuration « upwind », « downwind » ou « crosswind ».

Ainsi, en tenant compte des configurations possibles des figures 4 et 5, le porteur peut être dans 3 x 4 = 12 configurations différentes. Pour chacune de ces configurations, on détermine la trajectoire idéale que doit prendre le porteur afin de minimiser la puissance du fouillis dans la zone de recherche 41, 42, 43, 44.

Les critères pris en compte dans la détermination de la trajectoire idéale sont les suivants :

- configuration par rapport au vent ;
- distance entre la zone ciblée et le porteur.

Ci-après, à titre d'exemple, la solution selon l'invention est illustrée en considérant uniquement le critère sur la configuration par rapport au vent.

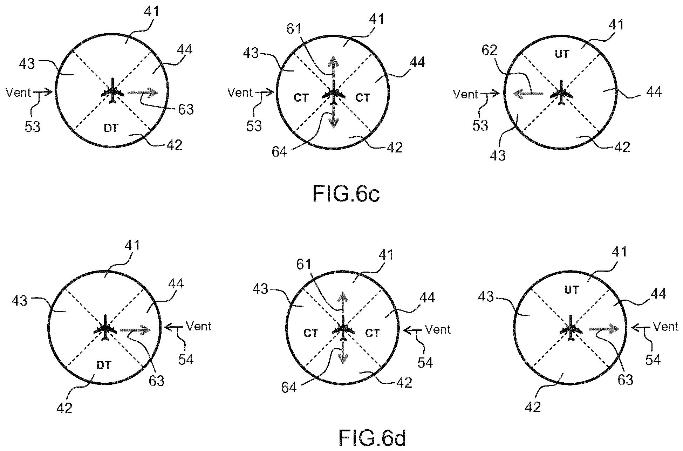

Les figures 6a, 6b, 6c et 6d présentent successivement, en fonction de l'orientation du vent par rapport au porteur, les douze configurations différentes et le choix retenu de la direction dans laquelle le porteur doit se diriger pour chaque configuration. Pour toutes ces configurations, le porteur est représenté cap vers le nord à l'instant de représentation.

La figure 6a illustre le choix de trajectoire du porteur en fonction de l'azimut de recherche de cible avec une direction 51 du vent venant du nord. On retrouve les quatre zones 41, 42, 43, 44 centrées sur des axes espacés en azimut de 90°. La figure 6a présente donc successivement les trois configurations possibles, DT, CT et UT, avec le vent venant du nord.

La direction de la trajectoire proposée à un opérateur est repérée par une flèche. Pour chacune de ces configurations, la trajectoire proposée à l'opérateur place le porteur dans une meilleure configuration par rapport au vent, c'est-à-dire avec une puissance moins élevée. Les trajectoires proposées sont définies ci-après :

- Dans le cas où la zone de recherche 42 est arrière (DT), le faisceau d'antenne étant dirigé vers cette zone, la puissance de fouillis est minimum lorsque le faisceau d'antenne est dirigé vent arrière (« downwind »), le porteur continue donc sa trajectoire face au vent, néanmoins si le porteur s'éloigne de la zone de cette zone de recherche 42, on propose une trajectoire perpendiculaire 62, 63 (« crosswind ») ;
- Dans le cas où la zone de recherche 42, 43 est perpendiculaire (CT), la direction proposée 61 est face au vent, car c'est la direction qui réduire la puissance du fouillis compte-tenu de la direction du faisceau d'antenne orientée vers cette zone 42, 43 (« crosswind ») ;
- Dans le cas où la zone de recherche 41 est avant (UT), le faisceau d'antenne nécessairement dirigé vers cette zone est « upwind » si le porteur continue dans la direction face au vent, ce qui est le cas le plus défavorable puisque la puissance du fouillis est alors maximum. Il y n'y a donc aucune chance de détecter une cible, par exemple un canot de sauvetage, dans cette direction. On propose donc au porteur de prendre une direction 62, 63 de trajectoire perpendiculaire au vent pour réduire la puissance de fouillis (« crosswind »).

La figure 6b illustre le choix de trajectoire du porteur en fonction de l'azimut de recherche de cible avec une direction 52 du vent venant du sud, pour les trois configurations possibles, DT, CT et UT :

- Dans le cas où la zone de recherche 42 est arrière (DT), la puissance de fouillis est maximum dans cette zone si le faisceau reste dirigé vers le vent 52 (« upwind »), on propose donc au porteur de prendre une direction perpendiculaire 62, 63 (« crosswind ») ;
- Dans le cas où la zone de recherche 42, 43 est perpendiculaire (CT), la direction proposée 61 est celle que suit le porteur, face au vent, car c'est la direction qui minimise la puissance du fouillis (« crosswind ») ;
- Dans le cas où la zone de recherche 41 est avant (UT), le porteur peut continuer dans cette direction avec le vent arrière, le faisceau d'antenne étant dirigée vers la zone 41 (« downwind »), car la puissance du fouillis est alors minimum. On peut proposer une direction de trajectoire perpendiculaire 62, 63 si le porteur est proche de la zone de recherche (« crosswind »).

La figure 6c illustre le choix de trajectoire du porteur en fonction de l'azimut de recherche de cible avec une direction 53 du vent venant de l'ouest, pour les trois configurations possibles, DT, CT et UT :

- Dans le cas où la zone de recherche 42 est arrière (DT), la puissance de fouillis est réduite en dirigeant le porteur dans la direction perpendiculaire 63 suivant le sens du vent ;
- Dans le cas où la zone de recherche 42, 43 est perpendiculaire (CT), la direction proposée au porteur est celle 61 qu'il suit ou la direction opposée 64 ;
- Dans le cas où la zone de recherche 41 est avant (UT), la puissance de fouillis est réduite en dirigeant le porteur dans la direction perpendiculaire 62 contraire au sens du vent ;

La figure 6d illustre le choix de trajectoire du porteur en fonction de l'azimut de recherche de cible avec une direction de vent d'est 54, pour les trois configurations possibles, DT, CT et UT :

- Dans le cas où la zone de recherche 42 est arrière (DT), la puissance de fouillis est réduite en dirigeant le porteur dans la direction perpendiculaire 63 opposée au sens du vent ;
- Dans le cas où la zone de recherche 42, 43 est perpendiculaire (CT), la direction proposée au porteur est celle 61 qu'il suit ou la direction opposée 64 ;
- Dans le cas où la zone de recherche 41 est avant (UT), la puissance de fouillis est réduite en dirigeant le porteur dans la direction perpendiculaire 63 contraire au sens du vent ;

Dans le cas d'un traitement en mode cohérent, les facteurs dimensionnant sont le gisement de l'antenne pour la largeur du spectre Doppler et la direction de pointage de l'antenne par rapport au vent pour le décalage du spectre Doppler. Pour minimiser la largeur du spectre Doppler il faut avoir un gisement d'antenne nul. Ainsi la direction de pointage $\phi$ de l'antenne par rapport au vent devient :

$$\phi = cap\_porteur + azimut\_vent \qquad\qquad (1)$$

De ce fait, en fonction de la volonté de détecter soit des cibles mobiles soit des cibles immobiles, les choix de trajectoire peuvent se réduire au cas suivants :

- Détection de cibles mobiles : le spectre Doppler doit être centré autour de 0 et il faudrait donc avoir $\phi$ proche de 90° modulo 180°. D'après la relation (1) cela revient donc à avoir le porteur perpendiculaire à la direction du vent.

    ◦ Si on dispose d'un *a priori* sur le signe de la vitesse radiale de la cible, on privilégie un décalage du spectre Doppler à l'opposé. Par exemple pour une vitesse radiale de cible positive, on choisit un angle $\phi$ proche de 180°.

- Détection de cibles immobiles : le spectre Doppler doit être décalé. Il faudrait donc avoir $\phi$ proche de 0 modulo 180°. D'après la relation (1) cela revient donc à avoir le porteur parallèle à la direction du vent.

Les figures 7a et 7b illustrent respectivement un procédé de détection de cibles maritimes selon l'art antérieur et le procédé de détection selon l'invention. La figure 7b illustre les étapes pour la mise en oeuvre des sélections de trajectoires telles que décrites précédemment pour optimiser le traitement de détection de cibles maritimes. La figure 7a rappelle l'art antérieur et notamment le rôle de l'opérateur.

Dans une solution de l'art antérieur un opérateur 70 reçoit les informations de mission 71 et les informations météo. Un exemple de mission opérationnelle 71 est par exemple la recherche d'un canot de sauvetage dans une zone maritime donnée. L'opérateur 70 choisit manuellement 73 la trajectoire de l'aéronef porteur en fonction de la mission et des informations météo dont il dispose. Le radar, placé en dessous de l'aéronef, effectue les opérations de détection 10 dans le contexte de détection défini par la trajectoire choisie.

Dans un dispositif selon l'invention, l'opérateur 70 n'intervient plus dans le choix de la trajectoire, une trajectoire est proposée automatiquement en fonction de la mission opérationnelle 71 et de l'environnement.
Un radar mettant en oeuvre le procédé selon l'invention comporte des moyens aptes à effectuer l'analyse de l'environnement 1 à partir de données externes, fournies au radar ou captées par celui-ci. L'analyse de l'environnement est par exemple rafraîchie à une cadence suffisante compte tenu de l'évolution des conditions extérieures (vent, état de mer météo, ...) et du mouvement de la plateforme vis-à-vis de la zone d'intérêt. Lors d'un rafraîchissement, seule la zone couverte par le domaine angulaire de balayage de l'antenne est actualisée. Ce peut être directement la totalité des 360° d'azimut ou secteur angulaire plus restreint. Le secteur angulaire balayé est défini dans le repère plateforme : il est donc possible de profiter des évolutions de la plateforme pour actualiser la situation en dehors de la zone instantanée de couverture. La phase 1 d'analyse de l'environnement et la phase 2 de sélection de la trajectoire sont mises en oeuvre par les moyens de traitement du radar selon l'invention. Il n'est pas nécessaire de prévoir du matériel ou des composants supplémentaires, l'invention pouvant être mise en oeuvre avec les moyens classiques d'un radar aéroporté.

L'analyse d'environnement comprend notamment la détermination de la direction du vent. A partir de cette direction et en tenant compte de la zone de recherche définie par la mission, les moyens de traitement du radar calculent la trajectoire à suivre 2 conformément aux règles décrites relativement aux figures 6a, 6b, 6c et 6d, lorsque le radar fonctionne en mode non cohérent.
La direction du vent peut être déterminée en estimant la direction où la puissance du signal rétrodiffusé par la mer est la plus forte, cette direction indiquant la direction du vent. Cette détermination peut être faite sur une seule analyse de 360° autour du porteur, ou de la totalité de la partie instrumentée du radar. Après la phase 1 d'analyse de l'environnement, les moyens de traitement mettent à jour les données d'environnement et notamment la direction du vent. Une carte du vent est par exemple mémorisée et enrichie au fil du temps. En parallèle, la trajectoire à suivre est mémorisée et mise à jour. Cette trajectoire à suivre est la trajectoire sélectionnée qui permet d'optimiser la détection. Comme décrit aux figures 6a à 6d, la connaissance de la direction du vent et de la zone de recherche par rapport au porteur permet de sélectionner une trajectoire optimale. Cette trajectoire à suivre est transmise au pilote par des moyens appropriés. Dans le cas où le porteur est un drone par exemple, l'opérateur est le pilote automatique.

Un autre facteur d'influence pour déterminer la trajectoire à suivre est le rapport fouillis à bruit, en pratique la puissance du fouillis de mer. En particulier, si la puissance du fouillis est trop importante dans les cases distance correspondant à la zone de recherche, correspondant à un CNR élevé, la détection peut être impossible, un changement de direction est alors proposé pour obtenir un CNR plus faible.

La direction du vent est également utile pour la détermination de la trajectoire en mode cohérent. En effet, dans ce cas, la direction de pointage de l'antenne radar par rapport au vent est un élément d'influence ainsi que le gisement de l'antenne comme cela a été montré précédemment. Pour déterminer la trajectoire, il faut aussi prendre en compte le fait que les cibles sont mobiles ou immobiles. Cette information de mobilité des cibles est donnée par la mission. Les moyens de traitement du radar élaborent la trajectoire en temps réel, au fil des tours d'antenne, en tenant compte de toutes ces informations, la trajectoire étant perpendiculaire ou parallèle au vent selon les cas, comme indiqué précédemment.

L'invention permet avantageusement de maximiser la probabilité de réussite d'une mission opérationnelle, du type recherche et sauvetage en mer (« Search & Rescue »), en maximisant la probabilité de détection. L'invention dote le radar de détection d'une capacité d'optimiser lui-même et automatiquement la loi de navigation optimum à suivre grâce à l'analyse en temps réel de son environnement et de la connaissance du besoin opérationnel. Dans une première phase 1, l'environnement est donc analysé afin d'en déduire les caractéristiques du fouillis de mer. Ensuite, le mode de détection, cohérent ou non cohérent, est utilisé. Dans une deuxième phase 2, le radar propose à l'opérateur une trajectoire du porteur optimale en fonction de la mission et de l'environnement. Ces phases 1, 2 sont répétées tout au long de la mission.

Les principaux avantages sont notamment les suivants :

- La trajectoire du porteur ainsi proposée optimise les capacités de détection du radar ;
- La formation des opérateurs est banalisée et simplifiée ;
- Le niveau d'expertise requis pour les opérateurs est diminué ;
- La quantité de stress des opérateurs est diminuée durant leur mission, ils peuvent alors se concentrer sur leur mission grâce à un moindre effort sur le choix de la navigation.

L'invention a également comme avantage qu'elle ne nécessite pas la connaissance a priori des caractéristiques de l'environnement.

## Revendications

1. Procédé d'optimisation de la détection de cibles marines effectuée par un radar aéroporté équipant un porteur (21), **caractérisé en ce que** la détection étant réalisée pour une mission donnée, ledit procédé comporte :

   - Une phase (1) d'analyse, d'apprentissage et d'actualisation de l'environnement dans laquelle les éléments d'influence du fouillis de mer perçus par le radar sont recherchés et mémorisés ;
   - Une phase (2) de mise à jour de la trajectoire à suivre par ledit porteur (21) en fonction des besoins de ladite mission et desdits éléments d'influence issus du résultat de ladite phase d'analyse, ladite trajectoire à suivre réduisant la puissance du fouillis reçue par le radar lorsque ladite antenne pointe vers une zone de recherche susceptible de contenir une cible ;

   lesdites phases (1, 2) étant répétées tout au long de ladite mission, un élément d'influence étant la direction de pointage de l'antenne dudit radar par rapport à la direction du vent, ladite direction du vent est déterminée en détectant la direction où la puissance du signal rétrodiffusé par la mer est maximale lors de ladite phase (1) d'analyse de l'environnement.

2. Procédé selon la revendication 1, **caractérisé en ce que** ladite phase (1) d'analyse est effectuée à chaque cycle de balayage, ladite phase (2) de mise à jour étant effectuée également à chaque cycle de balayage.

3. Procédé selon l'une quelconque des revendications précédentes, **caractérisé en ce qu'**un élément d'influence étant la direction de pointage de l'antenne dudit radar par rapport à la direction du vent et le mode de détection étant non cohérent, ladite trajectoire à suivre est fonction dudit élément d'influence et de ladite zone de recherche (41, 42, 43, 44) par rapport au cap du porteur (1), selon que ladite zone est située à l'avant (41), à l'arrière (42) ou perpendiculairement (43, 44).

4. Procédé selon l'une quelconque des revendications précédentes, **caractérisé en ce qu'**un élément d'influence étant le rapport fouillis à bruit et le mode de détection étant non cohérent, ladite trajectoire à suivre est fonction dudit rapport, ladite trajectoire étant déviée vers un autre cap lorsque ledit rapport dépasse un seuil donné.

5. Procédé selon l'une quelconque des revendications précédentes, **caractérisé en ce que** des éléments d'influence étant la direction de pointage de l'antenne dudit radar par rapport à la direction du vent et le gisement de l'antenne, et le mode de détection étant cohérent, ladite trajectoire à suivre est perpendiculaire à la direction du vent en cas de mission de détection d'une cible supposée mobile et parallèle à la direction du vent en cas de mission de détection d'une cible supposée immobile.

6. Procédé selon l'une quelconque des revendications précédentes, **caractérisé en ce que**, après ladite phase (1) d'analyse de l'environnement, les moyens de traitement mettent à jour et mémorisent une carte du vent, la trajectoire à suivre mise à jour étant également mémorisée.

7. Procédé selon l'une quelconque des revendications précédentes, caractérisé en que ladite trajectoire à suivre, mise à jour, est transmise à un opérateur par ledit radar par des moyens appropriés.

8. Procédé selon l'une quelconque des revendications précédentes, **caractérisé en ce que** ladite mission est une patrouille maritime ou de surveillance maritime.

9. Procédé selon la revendication 8, **caractérisé en ce que** ladite mission est une mission de sauvetage en mer.

10. Radar aéroporté, **caractérisé en ce qu'**il est configuré pour mettre en oeuvre le procédé selon l'une quelconque des revendications précédentes.

**Patentansprüche**

1. Optimierungsverfahren der Erkennung von Zielen im Meer durch einen Fluggerät-Bordradar, welcher einen Träger (21) ausrüstet, wobei die Detektion für eine gegebene Mission erfolgt, **dadurch gekennzeichnet, dass** das Verfahren Folgendes beinhaltet:

- eine Phase (1) der Analyse, des Lernens und des Aktualisierens der Umgebung, in welcher die Beeinflussungselemente des vom Radar wahrgenommenen Seaclutters gesucht und gespeichert werden;
- eine Phase (2) der Aktualisierung der vom Träger zu verfolgenden Bahn (21) angesichts des Bedarfs der Mission und der Beeinflussungselemente, welche sich aus dem Ergebnis der Analysephase ergeben, wobei die zu verfolgende Bahn die Leistung des vom Radar empfangenen Clutters mindert, wenn die Antenne einen Suchbereich anpeilt, welcher geartet ist, ein Ziel zu enthalten;

wobei die Phasen (1, 2) über die gesamte Dauer der Mission wiederholt werden, wobei ein Beeinflussungselement die Peilrichtung der Antenne des Radars in Bezug auf die Windrichtung ist, wobei die Windrichtung festgestellt wird, indem die Richtung detektiert wird, in welcher die Leistung des vom Meer zurückgestreuten Signals im Zuge der Analysephase (1) der Umgebung maximal ist.

2. Verfahren nach Anspruch 1, **dadurch gekennzeichnet, dass** die Analysephase (1) bei jedem Abtastzyklus erfolgt, wobei die Aktualisierungsphase (2) ebenfalls bei jedem Abtastzyklus erfolgt.

3. Verfahren nach einem der vorhergehenden Ansprüche, **dadurch gekennzeichnet, dass**, da ein Beeinflussungselement die Peilrichtung der Antenne des Radars in Bezug auf die Windrichtung ist und der Detektionsmodus nicht kohärent ist, die zu verfolgende Bahn sich nach dem Beeinflussungselement und dem Suchgebiet (41, 42, 43, 44) in Bezug auf den Kurs des Trägers (1) richtet, je nachdem, ob sich der Bereich vorn (41), hinten (42) oder rechtwinklig (43, 44) befindet.

4. Verfahren nach einem der vorhergehenden Ansprüche, **dadurch gekennzeichnet, dass**, da ein Beeinflussungselement das Verhältnis Echo zu Rauschen ist und der Detektionsmodus nicht kohärent ist, die zu verfolgende Bahn sich nach dem Verhältnis richtet, wobei die Bahn auf einen anderen Kurs abgelenkt wird, wenn das Verhältnis einen gegebenen Grenzwert überschreitet.

5. Verfahren nach einem der vorhergehenden Ansprüche, **dadurch gekennzeichnet, dass**, da Beeinflussungselemente die Peilrichtung der Antenne des Radars in Bezug auf die Windrichtung und die Flugrichtung der Antenne sind und der Detektionsmodus kohärent ist, die zu verfolgende Bahn rechtwinklig zur Windrichtung bei Missionen zur Detektion eines als beweglich angenommenen Ziels ist, und parallel zur Windrichtung bei Missionen zur Detektion eines als unbeweglich angenommenen Ziels ist.

6. Verfahren nach einem der vorhergehenden Ansprüche, **dadurch gekennzeichnet, dass** nach der Analysephase (1) der Umgebung, die Bearbeitungsmittel eine Windkarte aktualisieren und speichern, wobei die aktualisierte, zu verfolgende Bahn ebenfalls gespeichert wird.

7. Verfahren nach einem der vorhergehenden Ansprüche, **dadurch gekennzeichnet, dass** die aktualisierte, zu verfolgende Bahn durch das Radar durch geeignete Mittel an einen Bediener übertragen wird.

8. Verfahren nach einem der vorhergehenden Ansprüche, **dadurch gekennzeichnet, dass** die Mission eine Seepatrouille oder eine Seewachtpatrouille ist.

9. Verfahren nach Anspruch 8, **dadurch gekennzeichnet, dass** die Mission eine Seenotrettungsmission ist.

10. Fluggerät-Bordradar, **dadurch gekennzeichnet, dass** er konfiguriert ist, um das Verfahren nach einem der vorhergehenden Ansprüche umzusetzen.

**Claims**

1. Method for optimizing the detection of marine targets by an airborne radar integrated into a carrier (21), **characterized in that** the detection being done for a given mission, said method includes:

   - A phase (1) of analysing, learning and refreshing the environment, in which phase elements of influence on the sea clutter perceived by the radar are sought and stored in memory;
   - A phase (2) of updating the path to be followed by said carrier (21) depending on the requirements of said mission and said elements of influence issued from the result of said analysing phase, said path to be followed decreasing the power of the clutter received by the radar when said antenna is pointing towards a search zone liable to contain a target;

   said phases (1, 2) being repeated throughout said mission; one element of influence being the direction in which the antenna of said radar is pointing with respect to the wind direction, said wind direction is determined by detecting the direction in which the power of the signal backscattered by the sea is maximum during said phase (1) of analysing the environment.

2. Method according to Claim 1, **characterized in that** said analysing phase (1) is performed in each scanning cycle, said updating phase (2) also being performed in each scanning cycle.

3. Method according to any one of the preceding claims, **characterized in that** one element of influence being the direction in which the antenna of said radar is pointing with respect to the wind direction, and the detection mode being non-coherent, said path to be followed depends on said element of influence and whether said search zone (41, 42, 43, 44), with respect to the course of the carrier (1), is located in front (41), to the rear (42) or perpendicularly (43, 44).

4. Method according to any one of the preceding claims, **characterized in that** one element of influence being the clutter-to-noise ratio and the detection mode being non-coherent, said path to be followed depends on said ratio, said path being deviated to another course when said ratio exceeds a given threshold.

5. Method according to any one of the preceding claims, **characterized in that** elements of influence being the bearing of the antenna and the direction in which the antenna of said radar is pointing with respect to the wind direction, and the detection mode being coherent, said path to be followed is perpendicular to the wind direction in the case where the mission is to detect a target assumed to be mobile, and parallel to the wind direction in the case where the mission is to detect a target assumed to be immobile.

6. Method according to any one of the preceding claims, **characterized in that**, after said phase (1) of analysing the environment, the processing means update and store in memory a map of the wind, the updated path to be followed also being stored in memory.

7. Method according to any one of the preceding claims, **characterized in that** said path to be followed, updated, is transmitted to an operator by said radar via suitable means.

8. Method according to any one of the preceding claims, **characterized in that** said mission is a maritime patrol or maritime surveillance mission.

9. Method according to Claim 8, **characterized in that** said mission is a sea rescue mission.

10. Airborne Radar, **characterized in that** it is configured to implement the method according to any one of the preceding claims.

Analyse de l'environnement — 1

Sélection de la loi
de navigation préférentielle — 2

# FIG.1

22 — ↓ Vent 201

UW

203 — 21

CW — CW — 204

DW

202

# FIG.3

30
32

Cible immobile (bouée)
Sur bruit thermique car le
fouillis est fortement décalé

Cible mobile sur
fouillis car le fouillis
est fortement décalé

31

## FIG.2a

30'
32

Cible immobile (bouée)
Sur bruit fouillis car le
fouillis n'est pas décalé

Cible mobile sur
bruit thermique car le
fouillis est peu décalé

31

## FIG.2b

41
43
44
UT
CT CT
DT
42

## FIG.4

51
41
43
44
53
54
42
52

## FIG.5

FIG.6a

FIG.6b

FIG.6c

FIG.6d

ART ANTERIEUR

72 — Informations météo

71 — Mission opérationnelle

70 — OPERATEUR

73 — Choix manuel de la trajectoire

DETECTION — 10

FIG.7a

1 — Analyse de l'environnement

71 — Mission opérationnelle

70 — OPERATEUR

Proposition de la trajectoire "optimisée" — 2

DETECTION — 10

FIG.7b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120127025 A1